# EUROPÄISCHE PATENTSCHRIFT

(11) **EP 2 019 308 B1**
(45) Veröffentlichungstag und Bekanntmachung des Hinweises auf die Patenterteilung: **29.06.2011**
(21) Anmeldenummer: 08007799.3
(22) Anmeldetag: 23.04.2008
(51) Int. Cl.: G01N 21/31, G01N 21/85

(54) **Vorrichtung zur spektroskopischen Charakterisierung von an einer Elektrode gebildeten elektrochemischen Reaktionsprodukten**
Device for spectroscopic characterisation of electrochemical reactive products formed at an electrode
Dispositif de caractérisation spectroscopique de produits de réaction électrochimiques formés sur une électrode

(30) Priorität: 14.07.2007 DE 202007009859 U
(43) Veröffentlichungstag der Anmeldung: 28.01.2009
(73) Patentinhaber: DECHEMA Gesellschaft für Chemische Technik und Biotechnologie e.V., 60486 Frankfurt am Main (DE)
(72) Erfinder: Mangold, Klaus-Michael, 64342 Seeheim-Jugenheim (DE)
(74) Vertreter: Meyer-Dulheuer, Karl-Hermann

(56) Entgegenhaltungen:
- DE-A1- 2 735 247
- SHI P AND SCHERSON D A: "Diffusion Boundary Layer of a Rotating Disk Electrode As a Thin-Layer Spectroelectrochemical Cell" ANAL. CHEM., Bd. 76, Nr. 8, 15. April 2004 (2004-04-15) , Seiten 2398-2400, XP002575189
- ZAVARINE I S AND KUBIAK C P: "A versatile variable temperature thin layer reflectance spectroelectrochemical cell" J. ELECTROANAL. CHEM., Bd. 495, 2001, Seiten 106-109, XP002575190
- SHAW M J AND GEIGER W E: "A New Approach to Infrared Spectroelectrochemistry Using a Fiber-Optic Probe: Application to Organometallic Redox Chemistry" ORGANOMETALLICS, Bd. 15, 1996, Seiten 13-15, XP002575191

## Beschreibung

Gegenstand der Erfindung ist eine Vorrichtung und ein Verfahren zur spektroskopischen Charakterisierung von an einer Elektrode gebildeten elektrochemischen Reaktionsprodukten. Die erfindungsgemäße Vorrichtung und Methode ermöglicht die spektroskopische Charakterisierung von Produkten und Zwischenprodukten, die durch elektrochemische Reaktionen an einer rotierenden Scheibenelektrode gebildet wurden. Solche Reaktionen können die Umsetzung von gelösten Stoffen an der Scheibenelektrode oder elektrochemische Reaktionen der Scheibenelektrode selbst, beispielsweise Korrosion, sein. Des Weiteren können mit dieser Methode auch chemische Folgereaktionen von elektrochemisch gebildeten Produkten und Zwischenprodukten charakterisiert werden.

Eine kombinierte elektrochemische und spektroskopische Analyse wird als Spektroelektrochemie bezeichnet [A. J. Bard, L. R. Faulkner, Electrochemical Methods, Wiley, New York (2001), S. 680 ff]. Es ist bekannt, eine rotierende Ring-Scheiben-Elektrode (RRSE) zu verwenden, um die Produkte elektrochemischer Reaktionen an der rotierenden Scheibenelektrode mit Hilfe einer elektrochemischen Analyse an der Ringelektrode zu charakterisieren [A. J. Bard, L. R. Faulkner, Electrochemical Methods, Wiley, New York (2001), S. 350 ff].

Eine erste rotierende Scheibenelektrode mit spektroskopischer Detektion wurde von J. E. McClure beschrieben [J. E. McClure, Analytical Chemistry, 42 (1970) 551f.]. Bei dieser Anordnung wird in Transmission gemessen. Das monochromatische Messlicht wird mit Hilfe eines Lichtleiters von unten an die rotierende Scheibenelektrode herangeführt. Um die rotierende Scheibenelektrode herum wird ein Bündel aus rotierenden Lichtleiterfasern geklebt, mit denen das Messlicht zu einem Detektor, der von der rotierenden Einheit durch einen Spalt getrennt ist, geführt wird. Problematisch bei dieser Ausführung war die geringe Intensität der gemessenen Signale aufgrund der verwendeten Lock-in-Technik. Außerdem verursacht das rotierende Lichtleiterbündel starkes Rauschen im Messsignal.

In der deutschen Patentschrift DE 2735247 wurde der Ansatz, die Reaktionsprodukte in Transmisson zu messen, von K. Heusler aufgegriffen und durch die Verwendung einer Ringleuchte, die das Messlicht von unten an die rotierende Scheibenelektrode heranführt, sowie einer veränderten Lichtführung an der Scheibenelektrode weiterentwickelt. In der Mitte der Ringleuchte befindet sich eine kreisförmige Aussparung, um die Strömung zur rotierenden Scheibenelektrode nicht zu unterbrechen. Die Scheibenelektrode ist von einem Quarzring umgeben, der über der Ringleuchte angeordnet ist. Nachdem das Messlicht ausgehend von der Ringleuchte die Lösung und den Quarzring durchquert hat, wird es von einem ringförmigen Empfänger zu einem Lichtleiter und schließlich zum Detektor geführt. Der Strahlengang wird durch zwei Blenden an der Ringleuchte und am Empfänger begrenzt. Obgleich mit diesem System einige elektrochemische Reaktionen qualitativ und quantitativ charakterisiert werden konnten [H. Debrodt, Dissertation, Clausthal (1978)], wurde es kommerziell nicht umgesetzt. Die Ursachen hierfür dürften in der komplizierten und zeitaufwändigen Justierung von Ringleuchte und Empfänger sowie dem konstruktiv aufwändigen Design der gesamten Messzelle und den damit verbundenen hohen Herstellungskosten liegen. Des Weiteren ist die kanalartige Strömungsführung zur Scheibenelektrode durch die Aussparung der Ringleuchte, durch die zusätzlich noch die Haber-Luggin-Kapillare der Bezugselektrode geführt wird, ungünstig. Außerdem kann mit den Vorrichtungen nach Heusler und nach McClure die Dicke der durchstrahlten Schicht nicht verändert werden, was bei hohen Konzentrationen an Ausgangsstoffen nachteilig ist.

Spektroskopische Messungen in Reflexion an einer rotierenden Scheibenelektrode werden in Shi und Scherson [Anal. Chem. 76 (2004), 2398-2400] beschrieben. Dabei handelt es sich um eine Vorrichtung, die eine Messzelle und eine Scheibenelektrode zur elektrochemischen Messung sowie ein Lichtleitersystem, welches aus mindestens zwei Strahlengängen besteht, zur spektroskopischen Reflexionsmessung enthält. Das Messlicht wird dabei von unten durch ein Fenster im Boden der Messzelle an die rotierende Scheibenelektrode geführt. Es wird somit die gesamte Messlösung vom Boden der Messzelle bis zur Oberfläche der rotierenden Scheibenelektrode durchstrahlt. Dies kann sich nachteilig auf die Messergebnisse auswirken, da bei einem großen Abstand vom Boden der Messzelle bis zur Oberfläche der rotierenden Scheibenelektrode lichtabsorbierende Bestandteile in der zu messenden Lösung, wie Leitsalze oder Verunreinigungen, im Verhältnis zu den zu messenden elektrochemischen Reaktionsprodukten stärker erfasst werden. Dadurch bestünde die Gefahr, dass die elektrochemischen Reaktionsprodukte von den Signalen andere Stoffe überlagert würden. Ist hingegen der Abstand sehr gering, kann dies zu einer massiven Einschränkung der Strömungsbedingungen an der rotierenden Scheibenelektrode kommen. Die kann ebenfalls die elektrochemischen Messergebnisse negativ beeinflussen.

Die spektroskopische Messung in Reflexion an einer Elektrode wird in der deutschen Patentschrift DE 3737489 von H. Meyer et al. beschrieben. Dabei handelt es sich um ein Verfahren zur Kontrolle und Steuerung von Metallisierungsprozessen mit Hilfe eines Laserstrahles, der von der Oberfläche einer zu beschichtenden Elektrode reflektiert und die Intensität des reflektierten Strahles gemessen wird. Der Laserstrahl durchquert die gesamte Lösung zweimal. Im Falle einer rotierenden Scheibenelektrode findet man die elektrochemisch gebildeten Produkte in ausreichender Konzentration nur in einer dünnen Schicht von wenigen Mikrometern vor der Elektrode. Das von H. Meyer beschriebene Verfahren würde aufgrund des langen Weges des Lichtes durch die Lösung nur die Ausgangsstoffe spektroskopisch erfassen. Die vergleichsweise dünne Lösungs-Schicht, die die Produkte enthält, könnte spektroskopisch nicht erfasst werden. Außerdem wäre ein monochromatischer Laser für spektroskopische Analysen nur sehr eingeschränkt nutzbar. Deshalb ist das von H. Meyer beschriebene Verfahren für den Einsatzzweck der vorliegenden Erfindung ungeeignet.

Es stellte sich somit die Aufgabe, eine alternative Apparatur mit einfachem Aufbau und flexiblen Einsatzmöglichkeiten für die qualitative und quantitative Charakterisierung elektrochemischer Reaktionen bereitzustellen.

Die Aufgabe wurde durch eine Vorrichtung zur spektroskopischen Charakterisierung von an einer Elektrode gebildeten elektrochemischen Reaktionsprodukten gelöst,
wobei die Vorrichtung zur elektrochemischen Messung eine um ihre Längsachse drehbar gelagerte Scheibenelektrode (5) oder Scheibenelektrode (5) mit einem diese koaxial umgebenden ringförmigen Spiegel (6) oder rotierende Ring-Scheibenelektrode mit einem Scheibenelektrodenantrieb (1) umfasst,
und wobei die Vorrichtung zur spektroskopischen Reflexionsmessung ein mit einer Positioniereinheit (2, 3) verbundenes Lichtleitersystem (4) enthält, welches am nicht rotierenden Teil des Scheibenelektrodenantriebs oder an Teilen einer Messzelle montierbar ist, wobei das Lichtleitersystem (4) mindestens mit einer Anschlussmöglichkeit für eine Lichtquelle und einer Anschlussmöglichkeit für einen Detektor (D) ausgestattet ist, sowie aus mindestens zwei Strahlengängen besteht,
wobei ein Messlichtstrahl von der Lichtquelle durch den ersten Lichtleiter auf einen reflektierenden Bereich der Scheibenelektrode (5) oder auf einen die Scheibenelektrode koaxial umgebenden, ringförmigen Spiegel (6) oder auf einen reflektierenden Bereich der Ringelektrode gelenkt, dort reflektiert und durch den zweiten Lichtleiter zum Detektor gelenkt wird,
wobei das ein- und austretende Messlicht mit Hilfe eines oder mehrerer Prismen oder Spiegel und/oder durch eine Biegung im Lichtleitersystem jeweils um insgesamt 180° umgelenkt wird und
wobei die durchstrahlte Schichtdicke (a) einer zu charakterisierenden Lösung mithilfe der Positioniereinheit einstellbar ist.

Dabei wird die bekannte, rotierende Scheibenelektrode [A. J. Bard, L. R. Faulkner, Electrochemical Methods, Wiley, New York (2001), S. 335 ff] mit einer spektroskopischen Analyse im ultravioletten, sichtbaren und nahen infraroten Spektralbereich, UV-Vis-NIR, kombiniert. Die spektroskopische Messung kann mit monochromatischem oder mit polychromatischem Licht durchgeführt werden. Diese Methode ermöglicht die spektroskopische Charakterisierung von Produkten und Zwischenprodukten, die durch elektrochemische Reaktionen an einer rotierenden Scheibenelektrode gebildet wurden. Solche Reaktionen können die Umsetzung von gelösten Stoffen an der Scheibenelektrode oder elektrochemische Reaktionen der Scheibenelektrode selbst, z. B. Korrosion, sein.

Des Weiteren können mit dieser Methode auch chemische Folgereaktionen von elektrochemisch gebildeten Produkten und Zwischenprodukten charakterisiert werden.

Für die vorliegende Erfindung wird das Prinzip der bekannten, rotierenden Ring-Scheiben-Elektrode (RRSE) [A. J. Bard, L. R. Faulkner, Electrochemical Methods, Wiley, New York (2001), S. 350 ff], bei der die Produkte elektrochemischer Reaktionen an der rotierenden Scheibenelektrode mit Hilfe einer elektrochemischen Analyse an der Ringelektrode charakterisiert werden, weiterentwickelt und die elektrochemische durch eine spektroskopische Analyse ersetzt. Bei der RRSE sind die Scheiben- und die Ringelektrode koaxial auf einer Halterung montiert und durch ein Dielektrikum elektronisch voneinander isoliert. Während des Betriebs drehen sich die Elektroden in der Lösung, die in der Regel aus einem Elektrolyten und einem Stoff, der elektrochemisch charakterisiert werden soll, besteht. Aus der Rotation der Elektroden resultiert eine definierte Konvektion aus der Lösung zur Scheibenelektrode und an dieser radial nach außen. Als Folge davon stellt sich eine Diffusionsschicht mit definierter Schichtdicke vor den Elektroden ein. Diese definierten Massentransportbedingungen ermöglichen die Bestimmung von kinetischen Daten und Transportgrößen aus den gemessenen Strömen in Abhängigkeit von den jeweiligen Umdrehungsgeschwindigkeiten der rotierenden Scheibenelektrode. Elektrochemische Analysen mit der RRSE liefern jedoch keine Informationen über die Struktur der gebildeten Produkte und nur wenige Informationen über die Zusammensetzung von Produktgemischen. Dieser Nachteil der RRSE wird durch den Ersatz der Ringelektrode durch eine spektroskopische Detektion aufgehoben. Zusätzlich zu quantitativen Bestimmungen ermöglicht die spektroskopische Analyse auch die Aufklärung der Struktur der gebildeten Produkte.

Bei einer vorteilhaften Ausgestaltung der Vorrichtung ist das lösungsseitige Ende des Lichtleitersystems unter der Scheibenelektrode oder unter dem Spiegel positioniert.

Von besonderem Vorteil ist es ferner, wenn im Bodenbereich der Ummantelung der Scheibenelektrode ein ringförmiger, elektrisch isolierter Spiegel koaxial um die Scheibenelektrode herum und planparallel zu deren Bodenfläche angebracht ist.

Weiterhin ist es von Vorteil, wenn der Spiegel eine reflektierende Metallschicht oder Metallplatte aus einem gut reflektierenden Werkstoff ist. Dabei kann der Spiegel aus Silber, Platin, Edelstahl, Aluminium oder Gold bestehen.

Im Zuge einer vorteilhaften Weiterentwicklung sind die Komponenten des Lichtleitersystems in einem Gehäuse untergebracht und der Einfalls- und Reflexionswinkel des Lichts beträgt 0° bezogen auf das Lot der Spiegelfläche.

Erfindungsgemäß wird der ein- und austretende Lichtstrahl mit Hilfe eines oder mehrerer Prismen oder Spiegel und/oder durch eine Biegung im Lichtleitersystem jeweils um insgesamt 180° umgelenkt. Der apparative Aufwand der erfindungsgemäßen Vorrichtung ist auch deshalb so gering, weil das Lichtleitersystem von oben in die zu untersuchende Lösung eintaucht. Dadurch wird ein flexibler Einsatz auch bei bereits vorhandenen Messzellen oder Behältern möglich.

Das Lichtleitersystem ist mit Hilfe der Positioniereinheit manuell oder motorisch in x-Richtung und z-Richtung positionierbar. Dabei kann insbesondere mit Hilfe dieser Positioniereinheit der Abstand zwischen dem Lichtleitersystem und dem Spiegel justiert und somit die durchstrahlte Schichtdicke a eingestellt werden. Somit ist die einfache und bedienerfreundliche Justierung des Lichtleitersystems mit Hilfe einer x,z-Positioniereinheit möglich. Mit Hilfe der z-Positioniereinheit kann die Dicke der durchstrahlten Lösungs-Schicht eingestellt werden. Diese Einstellungsmöglichkeit ermöglicht die selektive, spektroskopische Erfassung der gebildeten Produkte vor dem Hintergrund der vergleichsweise hohen Konzentration an Ausgangsstoffen in der Lösung durch Positionierung des Lichtleitersystems nahe der rotierenden Scheibenelektrode.

Für elektrochemische Messungen mit Bezugselektrode kann eine Haber-Luggin-Kapillare als Bezugselektrode außen am Lichtleitersystem entlang geführt und zusammen mit diesem positioniert werden.

Besondere Flexibilität ergibt sich für die Vorrichtung, wenn die Scheibenelektrode als Wechselelektrode auf dem Scheibenelektrodenantrieb montiert ist.

Für die spektroskopische Messung kann insbesondere monochromatisches oder polychromatisches Licht im ultravioletten, sichtbaren und nahen infraroten Spektralbereich verwendet werden. Dazu ist eine entsprechende Verbindung zu einer Lichtquelle über die oben genannte Anschlussmöglichkeit des Lichtleitersystems herzustellen.

An der Scheibenelektrode kann eine konstante oder veränderliche Gleichspannung oder Wechselspannung oder ein konstanter oder veränderlicher Gleichstrom oder Wechselstrom angelegt werden.

Somit weist die Vorrichtung folgende Komponenten auf: Den elektrochemischen Teil der Vorrichtung bildet die bekannte rotierende Scheibenelektrode, die in der Regel als Wechselelektrode auf einem Scheibenelektrodenantrieb montiert ist. Die rotierende Scheibenelektrode kann mit konstanter oder veränderlicher Gleichspannung oder Wechselspannung oder mit konstantem oder veränderlichem Gleichstrom oder Wechselstrom betrieben werden. Ein konventioneller Scheibenelektrodenantrieb kann für das erfindungsgemäße System ohne wesentliche Veränderungen verwendet werden. Die Scheibenelektrode muss jedoch modifiziert werden. Die Scheibenelektrode ist koaxial und planparallel von einem, einigen Millimetern breiten, ringförmigen Spiegel umgeben. Der Spiegel muss von der Scheibenelektrode elektrisch isoliert sein, da sonst an der Fläche des Spiegels elektrochemische Umsetzungen stattfinden und die spektroskopische Messung verfälschen würden. Dies kann durch einen elektrisch isolierenden Ring, z. B. aus Kunststoff oder Keramik, realisiert werden, der zwischen der Scheibenelektrode und dem Spiegel angebracht wird. Der Abstand zwischen Scheibenelektrode und ringförmigen Spiegel kann von einigen hundert Mikrometern bis zu einigen Millimetern betragen. Der Spiegel, an dem das Messlicht reflektiert wird, sollte plan eingebettet sein, um das Rauschen der spektroskopischen Messung während der Rotation des Spiegels zu minimieren. Alternativ zu diesem Spiegel können auch kommerziell erhältliche, rotierende Ring-Scheibenelektroden verwendet werden. In diesem Fall dient die reflektierende Ringelektrode als Spiegel und wird während der spektroskopischen Messung stromlos gehalten. Dies setzt jedoch einen ausreichenden Reflexionsgrad der Ringelektrode voraus.

Der spektroskopische Teil der Vorrichtung besteht aus zwei Komponenten: Dem genannten, rotierenden Spiegel, der die Scheibenelektrode koaxial umgibt, und einem nicht rotierenden Lichtleitersystem, das das Messlicht von einer Lichtquelle an den Spiegel führt und das vom Spiegel reflektierte Licht wieder aufnimmt und zum Detektor eines Spektrometers leitet. Der Detektor kann beispielsweise ein Diodenarray oder ein Photomultiplier sein. Dazu besteht das Lichtleitersystem aus mindestens zwei, vorzugsweise aus genau zwei, im Wesentlichen parallel geführten Strahlengängen. Der Einfalls- und Reflexionswinkel beträgt 0° bezogen auf das Lot der Spiegelfläche. Die Verbindung zwischen den Lichtleitern, die von der Lichtquelle oder vom Spektrometer kommen und dem Lichtleitersystem erfolgt über entsprechende Anschlussmöglichkeiten (Adapter). Im Lichtleitersystem werden der ein- und austretende Lichtstrahl mit Hilfe eines oder mehrerer Prismen oder Spiegel jeweils um insgesamt 180° umgelenkt. Der austretende Lichtstrahl wird vor dem Eintritt in die Lösung parallel gerichtet und der reflektierte Lichtstrahl auf die Eintrittsöffnung des Lichtleiters gebündelt. Das Licht durchquert zweimal die Lösung zwischen Lichtleitersystem und Spiegel. Dies erhöht die Messempfindlichkeit. Der Aufbau des Lichtleitersystems ist dem Aufbau von bekannten Tauchsonden ähnlich, wie sie beispielsweise in DE 9319750 U1 beschreiben ist. Im Gegensatz zu diesen, ist der Spiegel, der das Messlicht reflektiert, jedoch mit dem Lichtleitersystem nicht fest verbunden. Alle Komponenten des Lichtleitersystems sind in einem gebogenen Gehäuse untergebracht. Das Lichtleitersystem wird am nicht rotierenden Teil des Scheibenelektrodenantriebs oder an Teilen der Messzelle montiert und mit Hilfe einer Positioniereinheit manuell oder motorisch in x-Richtung und z-Richtung positioniert. Die Positionierung in z-Richtung dient zur Einstellung des Abstandes zwischen dem Lichtleitersystem und dem Spiegel im Bereich von ca. 1 bis 10 mm, was einer durchstrahlten Schichtdicke von ca. 2 bis 20 mm entspricht. Durch diese Justierung kann das Verhältnis der spektroskopischen Messsignale von Produkt und nicht umgesetzten Ausgangsstoff optimiert werden. Die Positionierung in x-Richtung definiert die Stelle, an der das Licht reflektiert wird, sodass auch mittels Justierung in x-Richtung die Reflexionsbedingungen und damit die Messung optimiert werden kann. Die Reflexionsmessung wird in der Regel am Spiegel erfolgen. Es kann jedoch auch die Oberfläche der Scheibenelektrode sein. Somit könnten auch Schichten, z. B. leitfähige Polymere wie Polypyrrol, die sich in Folge von elektrochemischen Reaktionen auf der Scheibenelektrode gebildet haben, untersucht werden. Mit einer geeigneten Positionierungseinheit, die kleine Schrittweiten in x-Richtung ermöglicht, kann auch ein ortsaufgelöstes, spektroskopisches Profil der Scheibenelektrode erstellt werden. Dazu wird beispielsweise das Lichtleitersystem so unter der Scheibenelektrode positioniert, dass der Messstrahl am Rand der Scheibenelektrode reflektiert wird. Nach Aufnahme eines oder mehrerer Spektren wird das Lichtleitersystem um eine definierte Strecke entlang der Diagonale in Richtung des gegenüberliegenden Randes der Scheibenelektrode verschoben um dort wieder ein oder mehrere Spektren aufzunehmen. Die Wiederholung dieses Ablaufes entlang der gesamten Diagonale der Scheibenelektrode liefert ein ortsaufgelöstes spektroskopisches Abbild der Oberfläche der Scheibenelektrode. Die spektroskopische Messung kann bei rotierender oder stillstehender Scheibenelektrode erfolgen.

Die oben beschrieben Vorrichtung ist weiterhin durch folgende Vorteile gekennzeichnet: Die hier beschriebene Erfindung ersetzt die bisher verwendete, spektroskopische Bestimmung der an einer rotierenden Scheibenelektrode gebildeten Produkte in Transmission durch eine Reflexionsmessung und setzt hierfür Lichtleitertechnik ein. Die wesentlichen Vorteile im Vergleich zu den genannten Vorrichtungen liegen in der deutlichen Vereinfachung der gesamten Messanordnung und in der Einstellbarkeit der Dicke der durchstrahlten Schicht. Im Gegensatz zu den bekannten, in Transmission arbeiteten Systemen ist keine aufwändige und kostenintensive Modifizierung bestehender Scheibenelektrodenantriebe erforderlich. Diese können ohne großen Aufwand mit dem Lichtleiter- und Positioniersystem nachgerüstet werden. Das Lichtleitersystem wird von oben in die Messzelle eingeführt, so dass an der Messzelle keine oder nur geringfügige Veränderungen erforderlich werden. Durch entsprechende Adapter kann das Lichtleitersystem an eine Vielzahl marktgängiger Lichtquellen und Spektrometer, bzw. Detektorsysteme angekoppelt werden. Für elektrochemische Messungen mit Bezugselektrode und Haber-Luggin-Kapillare kann der Zellaufbau und die Positionierung der Kapillare dadurch vereinfacht werden, dass die Kapillare außen am Lichtleitersystem montiert und zusammen mit diesem positioniert wird.

Eine weitere Neuerung stellt die Möglichkeit dar, zusätzlich zur spektroskopischen Messung der Produkte im Umfeld der Scheibenelektrode nun auch Veränderungen auf der Scheibenelektrode selbst, die sich in Folge elektrochemischer Reaktionen einstellen, spektroskopisch erfasst zu können. Mit Hilfe der x-Positioniereinheit kann das Lichtleitersystem auch direkt unter der rotierenden Scheibenelektrode positioniert werden.

Die erfindungsgemäße Vorrichtung erlaubt in Abhängigkeit von der jeweiligen Umdrehungsgeschwindigkeit einer rotierenden Scheibenelektrode und von der anliegenden Spannung oder von dem anliegenden Strom an dieser Scheibenelektrode die spektroskopische Identifizierung von elektrochemisch gebildeten Produkten und Zwischenprodukten und eventueller chemischer Folgeprodukte anhand der Lage und Form charakteristischer Banden sowie auf der Basis einer Kalibrierung auch die quantitative Bestimmung der genannten Produkte anhand der Intensität der Banden bei bestimmten Wellenlängen. Außerdem können die Halbwertszeiten instabiler Zwischenprodukte durch Variation der genannten Parameter bestimmt werden. Somit ist das erfindungsgemäße System für kinetische und mechanistische Untersuchungen sehr geeignet.

Das Lichtleitersystem stört prinzipiell die Strömungsverhältnisse vor der rotierenden Scheibenelektrode. Aufgrund seines kleinen Durchmessers von ca. 6 mm ist diese Störung jedoch gering. Bei elektrochemischen Messungen in Dreielektroden-Technik muss die Haber-Luggin-Kapillare der Bezugselektrode unter der rotierenden Scheibenelektrode positioniert werden. Um den Zellaufbau zu vereinfachen und die Justierung zu erleichtern, kann diese Kapillare außen am Lichtleitersystem montiert und zusammen mit diesem positioniert werden.

Die erfindungsgemäße Vorrichtung kann besonders vorteilhaft für ein Verfahren zur spektroskopischen Bestimmung der an einer rotierenden Scheibenelektrode gebildeten Reaktionsprodukte verwendet werden, wobei die spektroskopische Messung in Reflexion erfolgt und die dabei durchstrahlte Schichtdicke einstellbar ist. Ein solches Verfahren ist ebenfalls Gegenstand der vorliegenden Erfindung. Dabei ergeben sich insbesondere Vorteile, wenn das Messlicht mit Hilfe eines Lichtleitersystems von einer Lichtquelle zum einem koaxial um die rotierende Scheibenelektrode angebrachten Spiegel und nach der Reflexion am Spiegel über das Lichtleitersystem zu einem Spektrometer oder Detektor geführt wird. Anstelle des Spiegels kann auch auf der rotierenden Scheibenelektrode spektroskopisch in Reflexion gemessen werden.

Die spektroskopische Reflexionsmessung kann auch an der rotierenden Scheibenelektrode mit Hilfe des Positioniersystems ortsaufgelöst erfolgen.

Ferner kann es dabei von Vorteil sein, wenn anstelle der durch einen Spiegel modifizierten, rotierenden Scheibenelektrode, eine rotierende Ring-Scheibenelektrode verwendet wird und die spektroskopische Messung dann in Reflexion an der stromlosen Ringelektrode erfolgt.

Weiterhin ist es von Vorteil, dass mit Hilfe eines Positioniersystems die Position, an der die Reflexion des Messlichtes erfolgt, justiert werden kann. Mit Hilfe des Positioniersystems kann der Abstand zwischen dem Lichtleitersystem und dem Spiegel justiert und damit die Dicke der durchstrahlten Schicht eingestellt werden.

Die spektroskopische Messung kann bei rotierender oder stillstehender Scheibenelektrode erfolgen.

Dabei kann die spektroskopische Messung mit monochromatischem oder polychromatischem Licht im ultravioletten, sichtbaren und nahen infraroten Spektralbereich erfolgen.

An der rotierenden Scheibenelektrode kann eine konstante oder veränderliche Gleichspannung oder Wechselspannung oder ein konstanter oder veränderlicher Gleichstrom oder Wechselstrom angelegt werden.

Mit Hilfe einer solchen spektroskopischen Reflexions-Messung können die elektrochemisch gebildeten Produkte qualitativ und quantitativ charakterisiert werden.

Weitere Einzelheiten werden anhand der folgenden Figuren erläutert, wobei
- Fig. 1: schematisch einen Querschnitt der erfindungsgemäßen Vorrichtung und
- Fig. 2: eine Ansicht von unten auf die Scheibenelektrode 5 zeigt.

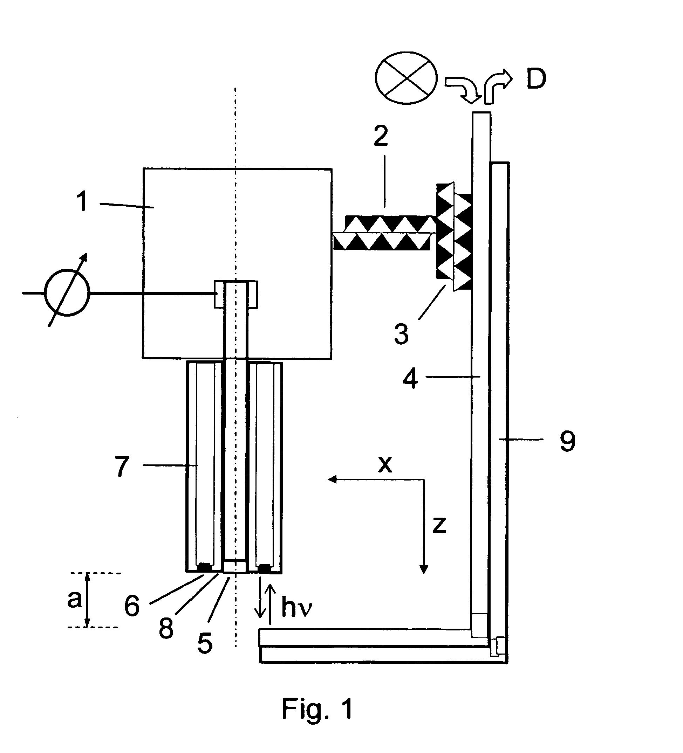

Fig. 1 zeigt schematisch einen Querschnitt des erfindungsgemäßen Systems, bestehend aus einem Scheibenelektrodenantrieb 1 mit Stromabnehmer, einer Positioniereinheit mit einem Positioniersystem in x-Richtung 2 und einem Positioniersystem in z-Richtung 3, einem Lichtleitersystem 4, einer rotierenden Scheibenelektrode 5 und der rotierenden Ummantelung 7 der Scheibenelektrode 5 mit dem daran angebrachten rotierenden, ringförmigen Spiegel 6. Die rotierende Scheibenelektrode 5 wird dabei als Arbeitselektrode verwendet. Die Messzelle und eine Gegenelektrode beliebiger Art ist in der Zeichnung nicht dargestellt.

Die beiden mit hv markierten Pfeile zeigen den Weg des Lichtes vom Lichtleitersystem zum Spiegel und nach der Reflexion am Spiegel wieder zurück zum Lichtleitersystem. Die dabei durchstrahlte Schichtdicke a ist entsprechend gekennzeichnet. Das Licht wird von einer Lichtquelle in das Lichtleitersystem geführt und verlässt das Lichtleitersystem in Richtung eines Detektors D eines Spektrometers.

Mit dem Lichtleitersystem kann, im Falle von elektrochemischen Messungen in Dreielektroden-Technik, eine Haber-Luggin-Kapillare 9 für eine beliebige Bezugselektrode verbunden sein. Der untere Teil der rotierenden Scheibenelektrode und des Lichtleitersystems tauchen während der Messung in eine zeichnerisch nicht dargestellte Lösung ein.

Für die Berechnung der Extinktion ist eine spektroskopische Referenzmessung, d. h. die Aufnahme eines Spektrums ohne elektrochemische Produkte erforderlich. Dies kann bei einer Messung dadurch erfolgen, dass während der Referenzmessung an der Scheibenelektrode kein Strom fließt und somit auch keine Produkte gebildet werden.

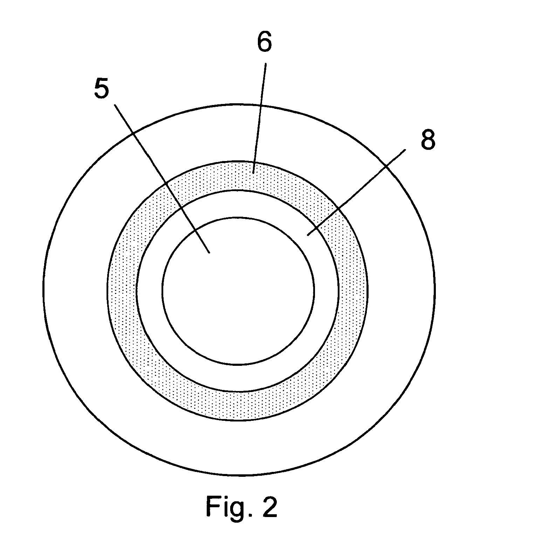

Fig. 2 zeigt eine Ansicht von unten auf die mit einem ringförmigen Spiegel 6 modifizierte, rotierende Scheibenelektrode 5. Zwischen dem Spiegel und der Scheibenelektrode befindet sich ein Ring 8 aus elektrisch isolierendem Material.

## Patentansprüche

1. Vorrichtung zur spektroskopischen Charakterisierung von an einer Elektrode gebildeten elektrochemischen Reaktionsprodukten,
wobei die Vorrichtung zur elektrochemischen Messung eine um ihre Längsachse drehbar gelagerte Scheibenelektrode (5) oder Scheibenelektrode (5) mit einem diese koaxial umgebenden ringförmigen Spiegel (6) oder rotierende Ring-Scheibenelektrode mit einem Scheibenelektrodenantrieb (1) umfasst,
und wobei die Vorrichtung zur spektroskopischen Reflexionsmessung ein mit einer Positioniereinheit (2, 3) verbundenes Lichtleitersystem (4) enthält, welches am nicht rotierenden Teil des Scheibenelektrodenantriebs oder an Teilen einer Messzelle montierbar ist, wobei das Lichtleitersystem (4) mindestens mit einer Anschlussmöglichkeit für eine Lichtquelle und einer Anschlussmöglichkeit für einen Detektor (D) ausgestattet ist, sowie aus mindestens zwei Strahlengängen besteht,
wobei ein Messlichtstrahl von der Lichtquelle durch den ersten Lichtleiter auf einen reflektierenden Bereich der Scheibenelektrode (5) oder auf einen die Scheibenelektrode koaxial umgebenden, ringförmigen Spiegel (6) oder auf einen reflektierenden Bereich der Ringelektrode gelenkt, dort reflektiert und durch den zweiten Lichtleiter zum Detektor gelenkt wird,
wobei das ein- und austretende Messlicht mit Hilfe eines oder mehrerer Prismen oder Spiegel und/oder durch eine Biegung im Lichtleitersystem jeweils um insgesamt 180° umgelenkt wird und
wobei die durchstrahlte Schichtdicke (a) einer zu charakterisierenden Lösung mithilfe der Positioniereinheit einstellbar ist.

2. Vorrichtung nach Anspruch 1, **dadurch gekennzeichnet, dass** das lösungsseitige Ende des Lichtleitersystems (4) unter der Scheibenelektrode (5) oder unter dem Spiegel (6) positioniert ist.

3. Vorrichtung nach Anspruch 1 oder 2, **dadurch gekennzeichnet, dass** im Bodenbereich der Ummantelung (7) der Scheibenelektrode (5) ein ringförmiger, elektrisch isolierter Spiegel (6) koaxial um die Scheibenelektrode (5) herum und planparallel zu deren Bodenfläche angebracht ist.

4. Vorrichtung nach Anspruch 3, **dadurch gekennzeichnet, dass** der Spiegel (6) eine reflektierende Metallschicht oder Metallplatte aus einem gut reflektierenden Werkstoff ist.

5. Vorrichtung nach einem der Ansprüche 1 bis 4, **dadurch gekennzeichnet, dass** die Komponenten des Lichtleitersystems (4) in einem Gehäuse untergebracht sind und der Einfalls- und Reflexionswinkel des Lichts 0° bezogen auf das Lot der Spiegelfläche beträgt.

6. Vorrichtung nach einem der Ansprüche 1 bis 5, **dadurch gekennzeichnet, dass** das Lichtleitersystem (4) von oben in eine Messzelle einbringbar ist.

7. Vorrichtung nach einem der Ansprüche 1 bis 6, **dadurch gekennzeichnet, dass** durch die Positioniereinheit, welche am nicht rotierenden Teil des Scheibenelektrodenantrieb oder an Teilen der Messzelle, insbesondere am Deckel der Messzelle, montierbar ist, manuell oder motorisch das Lichtleitersystem (4) in x-Richtung und/oder z-Richtung positionierbar ist.

8. Vorrichtung nach Anspruch 7, **dadurch gekennzeichnet, dass** mit Hilfe der Positioniereinheit der Abstand zwischen dem Lichtleitersystem (4) und dem Spiegel (6) justiert und somit die durchstrahlte Schichtdicke a eingestellt werden kann.

9. Vorrichtung nach einem der Ansprüche 1 bis 8, **dadurch gekennzeichnet, dass** eine Haber-Luggin-Kapillare (9) als Bezugselektrode außen am Lichtleitersystem (4) entlang geführt und mit diesem positioniert wird.

10. Vorrichtung nach einem der Ansprüche 3 bis 9, **dadurch gekennzeichnet, dass** sich zwischen der Scheibenelektrode (5) und dem ringförmigen Spiegel (6) ein Ring (8) aus elektrisch isolierendem Material befindet.

11. Verfahren zur spektroskopischen Bestimmung von an einer rotierenden Scheibenelektrode (5) gebildeten Reaktionsprodukten mit einer Vorrichtung gemäß den Ansprüchen 1-10, **dadurch gekennzeichnet, dass** die spektroskopische Messung in Reflexion erfolgt und die dabei durchstrahlte Schichtdicke a einstellbar ist.

12. Verfahren nach Anspruch 11, **dadurch gekennzeichnet, dass** ein Messlicht mit Hilfe eines Lichtleitersystems (4) von einer Lichtquelle zu einem koaxial um die rotierende Scheibenelektrode (5) angebrachten Spiegel (6) oder an die rotierende Scheibenelektrode (5) und nach der Reflexion am Spiegel (6) oder an der rotierenden Scheibenelektrode (5) über das Lichtleitersystem (4) zu einem Spektrometer oder Detektor geführt wird.

13. Verfahren nach Anspruch 12, **dadurch gekennzeichnet, dass** die spektroskopische Reflexionsmessung an der rotierenden Scheibenelektrode (5) mit Hilfe eines Positioniersystems ortsaufgelöst erfolgt.

14. Verfahren nach Anspruch 12, **dadurch gekennzeichnet, dass** eine rotierende Ring-Scheibenelektrode ohne Spiegel (6) verwendet wird und die spektroskopische Messung in Reflexion an der stromlosen Ringelektrode erfolgt.

## Claims

1. A device for the spectroscopic characterisation of electrochemical reaction products formed on an electrode, wherein for the electrochemical measurement the device comprises a disk electrode (5), which is mounted rotatably about the longitudinal axis of said device, or a disk electrode (5), which comprises an annular mirror (6) surrounding said disc electrode coaxially, or a rotating ring-disk electrode comprising a disk electrode drive (1), and wherein the device for the spectroscopic reflection measurement contains an optical waveguide system (4) which is connected to a positioning unit (2, 3) and can be mounted to the non-rotating part of the disk electrode drive or to parts of a measuring cell, the optical waveguide system (4) being equipped at least with a connection option for a light source and a connection option for a detector (D) and consisting of at least two beam paths, wherein a measurement light path is guided from the light source, through the first optical waveguide onto a reflective region of the disk electrode (5) or onto an annular mirror (6) coaxially surrounding the disk electrode, or onto a reflective region of the ring electrode, is reflected there and guided through the second optical waveguide towards the detector, wherein the incident and emergent measuring light is deflected with the aid of one or more prisms or mirrors and/or by a bending in the optical waveguide system by a total of 180° in each case, and wherein the layer thickness (a) which has been irradiated can be set to a resolution to be **characterised** with the aid of the positioning unit.

2. The device according to claim 1, **characterised in that** the resolution-side end of the optical guide system (4) is positioned beneath the disk electrode (5) or beneath the mirror (6).

3. The device according to either claim 1 or claim 2, **characterised in that** an annular, electrically insulated mirror (6) is mounted coaxially about the disk electrode (5) and plane-parallel to the base surface thereof in the base region of the casing (7) of the disk electrode (5).

4. The device according to claim 3, **characterised in that** the mirror (6) is a reflective metal layer or metal plate made of a material which reflects well.

5. The device according to any one of claims 1 to 4, **characterised in that** the components of the optical waveguide system (4) are mounted in a housing and the angle of incidence and the angle of reflection of the light are 0° based on the normal of the mirror face.

6. The device according to any one of claims 1 to 5, **characterised in that** the optical waveguide system (4) can be introduced into a measuring cell from above.

7. The device according to any one of claims 1 to 6, **characterised in that** owing to the positioning unit, which can be mounted to the non-rotating part of the disk electrode drive or to parts of the measuring cell, in particular to the cover of the measuring cell, the optical waveguide system (4) can be positioned, either manually or driven, in the x-direction and/or z-direction.

8. The device according to claim 7, **characterised in that** with the aid of the positioning unit the distance between the optical guide system (4) and the mirror (6) can be adjusted and the irradiated layer thickness a can thus be set.

9. The device according to any one of claims 1 to 8, **characterised in that** a Luggin-Haber capillary (9) is guided, as a reference electrode, outwardly on the optical waveguide system (4) and is positioned therewith.

10. The device according to any one of claims 3 to 9, **characterised in that** a ring (8) made of an electrically insulating material is arranged between the disk electrode (5) and the annular mirror (6).

11. A method for the spectroscopic determination of reaction products formed on a rotating disk electrode (5), comprising a device according to claims 1 to 10, **characterised in that** the spectroscopic measurement is carried out in reflection and the layer thickness a irradiated can be adjusted.

12. The method according to claim 11, **characterised in that** a measuring light is guided, with the aid of an optical waveguide system (4), from a light source to a mirror (6) mounted coaxially about the rotating disk electrode (5) or to the rotating disk electrode (5), and after reflection on the mirror (6) or on the rotating disk electrode (5) is guided via the optical waveguide system (4) to a spectrometer or detector.

13. The method according to claim 12, **characterised in that** the spectroscopic reflection measurement is taken at the rotating disk electrode (5) with the aid of a positioning system in a spatially resolved manner.

14. The method according to claim 12, **characterised in that** a rotating ring-disk electrode without a mirror (6) is used and the spectroscopic measurement is taken in reflection at the currentless ring electrode.

## Revendications

1. Dispositif pour la caractérisation spectroscopique de produits réactionnels électrochimiques formés au niveau d'une électrode,
dans lequel le dispositif de mesure électrochimique comprend une électrode à disque (5) monté en rotation autour de son axe longitudinal ou une électrode à disque (5) avec un miroir annulaire (6) qui l'entoure de façon coaxiale ou une électrode à disque annulaire tournante avec un dispositif d'entraînement d'électrode à disque (1),
et dans lequel le dispositif de mesure de réflexion spectroscopique comprend un système de guide d'ondes optiques (4) relié à une unité de positionnement (2, 3) et pouvant être monté sur la partie non tournante du dispositif d'entraînement d'électrode à disque ou sur des parties d'une cellule de mesure, dans lequel le système de guide d'ondes optiques (4) est muni d'au moins une option de connexion pour une source de lumière et une option de connexion pour un détecteur (D) et se compose d'au moins deux trajectoires de rayons,
dans lequel un rayon lumineux de mesure est dirigé de la source de lumière à travers le premier guide d'ondes optiques sur une zone réfléchissante de l'électrode à disque (5) ou sur un miroir (6) annulaire entourant de façon coaxiale l'électrode à disque ou sur une zone réfléchissante de l'électrode annulaire, y est réfléchi et dirigé à travers le deuxième guide d'ondes optiques vers le détecteur,
dans lequel la lumière de mesure incidente et émergeante est déviée à l'aide d'un ou de plusieurs prismes ou miroirs et/ou par une courbure dans le système de guide d'ondes optiques respectivement de 180° en tout, et
dans lequel l'épaisseur de couche traversée (a) d'une solution à caractériser est réglable à l'aide de l'unité de positionnement.

2. Dispositif selon la revendication 1, **caractérisé en ce que** l'extrémité côté solution du système de guide d'ondes optiques (4) est positionnée sous l'électrode à disque (5) ou sous le miroir (6).

3. Dispositif selon la revendication 1 ou 2, **caractérisé en ce que** dans la zone de fond de la gaine (7) de l'électrode à disque (5) un miroir annulaire (6) électriquement isolant est fixé de façon coaxiale autour de l'électrode à disque (5) et de façon parallélépipédique à la surface de fond de celle-ci.

4. Dispositif selon la revendication 3, **caractérisé en ce que** le miroir (6) est une couche de métal ou une plaque de métal réfléchissante composée d'un matériau à haut pouvoir de réflexion.

5. Dispositif selon l'une quelconque des revendications 1 à 4, **caractérisé en ce que** les composants du système de guide d'ondes optiques (4) sont logés dans un boîtier, et **en ce que** l'angle d'incidence et de réflexion de la lumière est de 0° par rapport à la verticale de la surface de miroir.

6. Dispositif selon l'une quelconque des revendications 1 à 5, **caractérisé en ce que** le système de guide d'ondes optiques (4) peut être introduit dans une cellule de mesure par le haut.

7. Dispositif selon l'une quelconque des revendications 1 à 6, **caractérisé en ce que** l'unité de positionnement qui peut être montée sur la partie non tournante du dispositif d'entraînement de l'électrode à disque ou sur des parties de la cellule de mesure, en particulier sur le couvercle de la cellule de mesure, permet de positionner de façon manuelle ou motorisée le système de guide d'ondes optiques (4) dans la direction x et/ou la direction z.

8. Dispositif selon la revendication 7, **caractérisé en ce que** l'unité de positionnement permet d'ajuster la distance entre le système de guide d'ondes optiques (4) et le miroir (6) et donc de régler l'épaisseur de couche traversée a.

9. Dispositif selon l'une quelconque des revendications 1 à 8, **caractérisé en ce qu'**un siphon capillaire (9) est guidé comme une électrode de référence à l'extérieur du système de guide d'ondes optiques (4) et positionnée à l'aide de celui-ci.

10. Dispositif selon l'une quelconque des revendications 3 à 9, **caractérisé en ce qu'**un anneau (8) en matériau électriquement isolant se trouve entre l'électrode à disque (5) et le miroir annulaire (6).

11. Procédé pour la détermination spectroscopique de produits réactionnels formés sur une électrode à disque tournante (5), comprenant un dispositif selon les revendications 1 à 10, **caractérisé en ce que** la mesure spectroscopique est effectuée en réflexion et l'épaisseur de couche traversée a est réglable.

12. Procédé selon la revendication 11, **caractérisé en ce qu'**une lumière de mesure est guidée à l'aide d'un système de guide d'ondes optiques (4) d'une source de lumière à un miroir (6) fixé de façon coaxiale autour de l'électrode à disque tournante (5) ou sur l'électrode à disque tournante (5) et guidée après réflexion sur le miroir (6) ou sur l'électrode à disque tournante (5) à travers le système de guide d'ondes optiques (4) vers un spectromètre ou un détecteur.

13. Procédé selon la revendication 12, **caractérisé en ce que** la mesure de réflexion spectroscopique est effectuée au niveau de l'électrode à disque tournante (5) à l'aide d'un système de positionnement à résolution locale.

14. Procédé selon la revendication 12, **caractérisé en ce qu'**une électrode à disque annulaire tournante sans miroir (6) est utilisée et la mesure spectroscopique est effectuée en réflexion sur l'électrode annulaire hors tension.
